# EUROPÄISCHE PATENTSCHRIFT

(11) **EP 0 645 462 B1**
(45) Veröffentlichungstag und Bekanntmachung des Hinweises auf die Patenterteilung: **13.06.2001**
(21) Anmeldenummer: 94113265.6
(22) Anmeldetag: 25.08.1994
(51) Int. Cl.: C21D 9/02, C21D 7/06, F16F 1/02

(54) **Verfahren zur Optimierung der Eigenspannungsverteilung in Federelementen**
Process for optimizing the force distribution in spring elements
Procédé d'optimisation de la distribution des forces dans des éléments à ressorts

(30) Priorität: 11.09.1993 DE 4330832
(43) Veröffentlichungstag der Anmeldung: 29.03.1995
(73) Patentinhaber: Thyssen Krupp Automotive AG, 44793 Bochum (DE)
(72) Erfinder: Vondracek, Hans, Ing., D-58339 Breckerfeld (DE)

(56) Entgegenhaltungen:
- GB-A- 959 801
- US-A- 2 351 726
- US-A- 3 661 655
- US-A- 5 225 008
- MACHINERY, 18. Juni 1954, GREAT BRITAIN Seiten 1297 - 1301 C.J. DADSWELL ET AL. 'The Manufacture and Properties of Automobile Suspension Springs'
- : "Warmgeformte Federn, S.189-191", 1987, HOESCH HOHELINBURG AG,

## Beschreibung

Die vorliegende Erfindung betrifft ein Verfahren nach dem Oberbegriff des Patentanspruchs 1.

Als optimal wird in diesem Zusammenhang eine Eigenspannungsverteilung angesehen, bei der in der fertigen Feder im höchstbelasteten Querschnitt die resultierende Lastspannung in keinem Punkt des Querschnittes die Druck- bzw. Zugfließgrenze erreicht und ein kritischer Zugspannungswert von 200 N/mm² im oberflächennahen Randbereich nicht überschritten wird.

Nach dem Stand der Technik kommen zur gezielten Beeinflussung der Eigenspannungen in Federelementen in erster Linie zwei Verfahren, das Setzen und das Kugelstrahlen zur Anwendung, welche die Eigenspannungsverteilung primär in bestimmten, den unterschiedlichen Verfahren zugeordneten Querschnittsbereichen verändern. Unter dem Setzen bzw. Plastizieren von Federn versteht man, die Erstbelastung von Federn nach Formgebung und Vergütung, bei der die Fließgrenze des Werkstoffes, abhängig von Feder- und Beanspruchsart, in Teilbereichen des Federquerschnittes überschritten wird.

Das Verhältnis der plastizierten Querschnittsfläche zum Gesamtquerschnitt, auch als Plastizierungsgrad P bezeichnet, bestimmt in Verbindung mit der werkstoffspezifischen Fließgrenze Höhe und Verteilung der durch den Setzvorgang induzierten Eigenspannungen.

Durch lokal begrenzte Änderung der Fließgrenze, hervorgerufen durch die Vorgabe eines bestimmten Festigkeits- oder Temperaturprofiles im Querschnitt der Feder während des Setzvorganges, kann daher die Eigenspannung sowohl in ihrer Höhe als auch in ihrer Verteilung im Sinne einer Optimierung gezielt beeinflußt werden.

Während beim Setzen die Eigenspannungen über den gesamten Querschnitt, abhängig von der Beanspruchungsart, einachsig bei Biegung oder zweiachsig bei Torsion, und von der Beanspruchungsrichtung, Zug oder Druck, gerichteten Änderungen unterworfen sind, ist die Beeinflussungszone des Querschnitts beim Kugelstrahlen im wesentlichen auf die oberflächennahen Randbereiche beschränkt, wobei unabhängig von Feder- und Beanspruchungsart eine orthogonale Spannungsverteilung in der Randschicht erzeugt wird.

In der US-PS 2 608 752 wird am Beispiel einer Einblattfeder ein Verfahren beschrieben, bei welchem die Zugseite einer Blattfeder unter Vorspannung (60 % bis 100 % Rₑ) kugelgestrahlt wird. Das Verfahren ist unter der Bezeichnung "Spannungsstrahlen" in der Praxis eingeführt und wird für Einblatt- und Parabelfedern heute weltweit in vielen Varianten angewendet.

Maschinen und Vorrichtungen zum Spannungsstrahlen von Blattfedern sowie einige Verfahrensvarianten sind in der US-PS 3 094 768 und GB-PS 959 801 beschrieben.

Als Alternative zum Spannungsstrahlen, mit vergleichbarer Wirkung ohne den Nachteil der relativ großen Formänderung, wird in der US-PS 3 205 556 ein Strahlverfahren beschrieben, bei dem die Blattfedern unbelastet (d.h. ohne Vorspannung), jedoch mit erhöhter Temperatur (150 °C bis 350 °C) kugelgestrahlt werden. Dieses im folgenden als "Warmstrahlen" bezeichnete Verfahren hat sich bisher in der Praxis nicht durchsetzen können. Begründet ist dies einmal dadurch, daß die größeren Formänderungen beim Spannungsstrahlen bei Neuentwicklungen einfach durch entspreche de Vorgaben für die Biegewerkzeuge kompensiert werden können und zum anderen, daß die lebensdauersteigernde Wirkung des Warmstrahlens in der Regel wesentlich niedriger ist als beim Spannungsstrahlen.

Gemeinsam ist allen zuvor genannten Druckschriften, daß die beispielhaft genannten Anwendungen ausschließlich Blattfedern als Federelemente, mit im wesentlichen einachsiger Beanspruchung betreffen.

Die hierfür gültigen Aussagen zur Verbesserung der Lebensdauer können, insbesondere im Hinblick auf die Reihenfolge der einzelnen Fertigungsschritte und eine Optimierung der Eigenspannungsverteilung, auf torsionsbeanspruchte Federelemente nicht übertragen werden, ohne die im wesentlichen zweiachsige Beanspruchung zu berücksichtigen.

Ferner ist zum Beispiel aus "Warmgeformte Federn", Hoesch Hohenlimburg AG, 1987, Seiten 189 bis 191 das Setzen und nachfolgende Kugelstrahlen von Schraubendruckfedern bekannt, wobei es nach der US-A 3661655 darüber hinaus bekannt ist, durch Erwärmen oder Abkühlen in den Federelementen ein bestimmtes, gleichmäßiges Temperatur- bzw. Festigkeitsniveau zu erzeugen.

Der Erfindung liegt nunmehr die Aufgabe zugrunde, ein Verfahren der eingangs.genannten Art zu schaffen, das eine weitere Verbesserung der Lebensdauer von insbesondere Schraubendruckfedern mit Festigkeiten von Rm ≥ 1.800 N/mm² erlaubt.

Diese Aufgabe wird durch die im kennzeichnenden Teil des Patentanspruchs 1 angegebenen Merkmale gelöst.

Vorteilhafte und zweckmäßige Verfahrensschritte des erfindungsgemäßen Verfahrens sind in den Ansprüchen 2 bis 5 angegeben.

Die Vorteile des erfindungsgemäßen Verfahrens liegen insbesondere darin, daß je nach Zielsetzung der Optimierung eine Erhöhung der Lebensdauer der Schraubendruckfedern oder eine Reduzierung des Federgewichts erreicht wird.

Anhand der schematischen Zeichnung wird das erfindungsgemäße Verfahren im folgenden näher erläutert.

Unabhängig davon, ob Federelemente warm, kalt oder halbwarm geformt werden, geht das vorliegende Verfahren davon aus, daß die Schraubendruckfedern mit einer aus den vorangehenden Fertigungsschritten 1 wie Härten, Anlassen bzw. Entspannen verbliebenen Restwärme einer Presse zum Setzen 2 über eine Transportstrecke 3 zugeführt werden, von der die Schraubendruckfedern unmittelbar nach dem Setzvorgang über eine Transportstrecke 4 in eine Anlage zum Kugelstrahlen 5 weitertransportiert werden, wobei die Anlage zum Kugelstrahlen 5 aus mindestens zwei voneinander unabhängigen Strahlenkammern 6 und 8, die über eine Transportstrecke 7 verbunden sind, besteht, wobei die Transportstrecken 3 und 4 vor und zwischen den Fertigungszonen Setzen 2 bzw. Kugelstrahlen 5 so ausgeführt sind, daß die Schraubendruckfeder auf eine vorgegebene Temperatur erwärmt bzw. abgekühlt werden kann. Entscheidend hierbei ist, daß durch die Art der Temperierung ein für den nachfolgenden Fertigungsschritt vorgeschriebenes Temperatur- bzw. Festigkeitsprofil im Stabquerschnitt der Schraubendruckfeder erzeugt wird.

Die Kugelstrahlbehandlung in der ersten Strahlkammer 6 erfolgt in der Regel als Vorkonditionierung der Schraubendruckfeder für die abschließende Kugelstrahlbehandlung in der zweiten Stahlkammer 8, welche mit allen notwendigen Einrichtungen für das Spannungsstrahlen von Schraubendruckfedern ausgerüstet ist.

Unter Vorkonditionierung sind hier alle Maßnahmen zu verstehen, die insbesondere die Tiefenwirkung der Kugelstrahlbehandlung erhöhen.

Nach der Kugelstrahlbehandlung in der zweiten Strahlkammer 8 werden die Schraubenfedern über eine Transportstrecke 9 der Endfertigung 10 zugeführt.

Neben den üblichen Standardmaßnahmen wie der Erhöhung der Strahlenergie (mV²/2) durch Vergrößerung der Strahlmittelgeschwindigkeit und/oder der Strahlmittelmasse insbesondere des Kornduchmessers, wird das Federelement der ersten Strahlkammer 6 über die Transportstrecke 4 mit einem vom Werkstoff abhängigen Temperatur- bzw. Festigkeitsprofil zugeführt und der Strahlbehandlung unterzogen.

Das Kugelstrahlen wird hierbei, sofern es sich um ein Warmstrahlen handelt, nicht wie in der US-PS 3 205 556 beschrieben als Alternative zum Spannungsstrahlen, zur Minimierung der durch das Spannungsstrahlen hervorgerufenen Form- und Gestaltänderungen der Feder angewendet, sondern als sinnvolle Ergänzung und Vorbereitung des Spannungsstrahlens.

Die Schraubendruckfedern werden nach der Kugelstrahlbehandlung in der ersten Strahlkammer 6 über die Transportstrecke 7 der zweiten Strahlkammer 8 zugeführt, in der die Schraubendruckfedern auf eine vorgegebene Länge oder eine vorgegebene Last vorgespannt werden, und im vorgespannten Zustand einer Kugelstrahlbehandlung ausgesetzt.

Um eine allseitige, möglichst gleichmäßige Bestrahlung sicherzustellen, müssen die Schraubendruckfedern um ihre Mittelachse rotierend oder oszillierend in den "Hot-Spot"-Bereich des Kugelstrahls bewegt werden. Dies kann sowohl in einer zeitabhängigen Taktfolge als auch in einem kontinuierlichen Durchlauf geschehen.

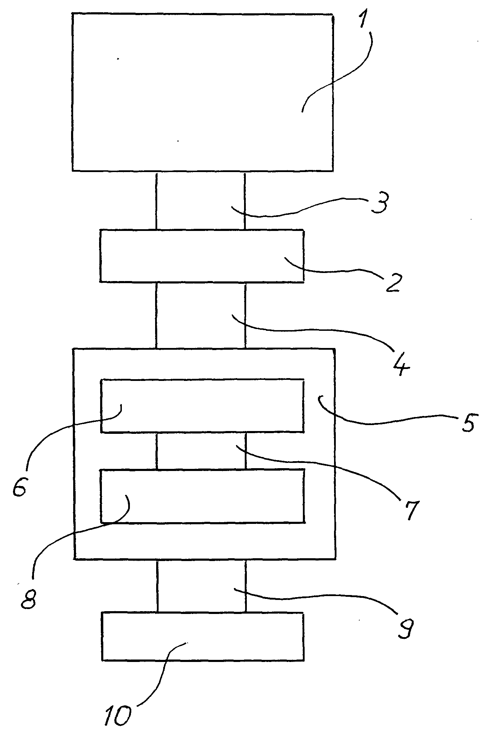

## Patentansprüche

1. Verfahren zur Optimierung der Eigenspannungsverteilung im Stabquerschnitt von Schraubendruckfedern mit einer Festigkeit höher als 1800 N/mm², die als Fahrzeugtragfedern dienen, die zunächst gesetzt (2) und dann kugelgestrahlt (5) werden, dadurch gekennzeichnet, daß die Schraubendruckfedern vor dem Setzen (2) und Kugelstrahlen (5) durch gezielte Erwärmung oder Abkühlung ein für den nachfolgenden Fertigungsschritt vorgeschriebenes Temperaturprofil bzw. Festigkeitsprofil im Stabquerschnitt erzeugt wird, wobei eine lokal begrenzte Änderung der Fließgrenze im Stabquerschnitt der Schraubendruckfedern hervorgerufen wird.

2. Verfahren nach Anspruch 1, dadurch gekennzeichnet, daß das vorgegebene, auf den Stabquerschnitt bezogene Festigkeitsprofil temporär, vor dem Setzen (2) bzw. Kugelstrahlen (5) durch eine gezielte Erwärmung oder Abkühlung erzeugt wird.

3. Verfahren nach Anspruch 1, dadurch gekennzeichnet, daß das vorgegebene, auf den Stabquerschnitt bezogene Festigkeitsprofil permanent, durch geeignete Fertigungsschritte vor dem Setzen (2) und Kugelstrahlen (5) erzeugt wird und bei Raumtemperatur vorliegt.

4. Verfahren nach einem der Ansprüche 1 bis 3, dadurch gekennzeichnet, daß sowohl vor dem Setzen (2) als vor dem Kugelstrahlen (5) eine Wärmebehandlung durchgeführt wird, wobei das vorgegebene Festigkeitsprofil vor dem Setzen (2) unterschiedlich ist zu dem vorgegebenen Festigkeitsprofil vor dem Kugelstrahlen (5).

5. Verfahren nach einem oder mehreren der Ansprüche 1 bis 4, dadurch gekennzeichnet, daß das erzielte Festigkeitsprofil über die Stablänge nicht konstant ausgebildet ist.

## Claims

1. Method for optimizing the inherent stress distribution in the bar cross-section of helical compression springs having a strength greater than 1800 N/mm², which serve as motor vehicle bearing springs which are initially set (2) and then shot-blasted (5), characterised in that the helical compression springs prior to the processes of setting (2) and shot-blasting (5) by virtue of specific heating and cooling processes [sic], a temperature profile or strength profile which is prescribed for the subsequent manufacturing step is produced in the cross-section of the bar, wherein a locally defined change in the yielding point is produced in the bar cross-section of the helical compression springs.

2. Method according to claim 1, characterised in that the predetermined strength profile with regard to the cross-section of the bar is produced temporarily prior to the processes of setting (2) and shot-blasting (5) by virtue of specific heating and cooling processes.

3. Method according to claim 1, characterised in that the predetermined strength profile with regard to the cross-section of the bar is produced permanently by virtue of suitable manufacturing steps prior to the processes of setting (2) and shot-blasting (5) and prevails at room temperature.

4. Method according to any one of claims 1 to 3, characterised in that prior to the processes of setting (2) and shot-blasting (5) a heat treatment process is performed, wherein the predetermined strength profile prior to the setting process (2) is different to the predetermined strength profile prior to the shot-blasting process (5).

5. Method according to any one or several of claims 1 to 4, characterised in that the specific strength profile is not constant over the length of the bar.

## Revendications

1. Procédé d'optimisation de la distribution des contraintes internes dans la section transversale de barres de ressorts hélicoïdaux de compression d'une résistance mécanique supérieure à 1800 N/mm² qui servent d'amortisseur pour véhicules, qui subissent d'abord un traitement de fatigue (2) et sont ensuite grenaillés (5), caractérisé en ce qu'avant le traitement de fatigue (2) et le grenaillage (5), un profil de température ou un profil de résistance mécanique, prescrits pour les étapes de fabrication suivantes, sont produits dans la section transversale de la barre des ressorts hélicoïdaux de compression, par réchauffement ou refroidissement contrôlé, avec modification locale limitée de la limite élastique dans la section transversale de la barre des ressorts hélicoïdaux de compression.

2. Procédé selon la revendication 1, caractérisé en ce qu'avant le traitement de fatigue (2) ou le grenaillage (5), le profil prédéterminé de résistance mécanique dans la section transversale de la barre est produit de manière temporaire par réchauffement ou refroidissement contrôlé.

3. Procédé selon la revendication 1, caractérisé en ce que le profil prédéterminé de résistance mécanique dans la section transversale de la barre est produit de manière permanente par des étapes de fabrication qui précèdent le traitement de fatigue (2) et le grenaillage (5), et se maintient à la température ambiante.

4. Procédé selon les revendications 1 à 3, caractérisé en ce que l'on conduit un traitement thermique aussi bien avant le traitement de fatigue (2) qu'avant le grenaillage (5), le profil prédéterminé de résistance mécanique avant le traitement de fatigue (2) étant différent du profil prédéterminé de résistance mécanique avant le grenaillage (5).

5. Procédé selon l'une ou plusieurs des revendications 1 à 4, caractérisé en ce que le profil de résistance mécanique obtenu n'est pas constant sur toute la longueur de la barre.
